(19) Europäisches Patentamt
European Patent Office
Office européen des brevets

(11) Veröffentlichungsnummer: **0 493 673 B1**

(12) **EUROPÄISCHE PATENTSCHRIFT**

(45) Veröffentlichungstag der Patentschrift: **28.06.95**

(51) Int. Cl.[6]: **C08F 220/12**

(21) Anmeldenummer: **91119998.2**

(22) Anmeldetag: **23.11.91**

Teilanmeldungen 94116228.1, 94116226.5, 94116227.3.

# (54) Mit Luftfeuchtigkeit selbsthärtbare Copolymerisate und Mischungen.

(30) Priorität: **06.12.90 DE 4038939**

(43) Veröffentlichungstag der Anmeldung:
**08.07.92 Patentblatt 92/28**

(45) Bekanntmachung des Hinweises auf die Patenterteilung:
**28.06.95 Patentblatt 95/26**

(84) Benannte Vertragsstaaten:
**DE ES FR GB IT NL**

(56) Entgegenhaltungen:
**EP-A- 0 075 206**
**EP-A- 0 122 457**
**EP-A- 0 387 587**
**WO-A-90/00570**
**DE-A- 3 710 963**

(73) Patentinhaber: **BASF Aktiengesellschaft**
**Carl-Bosch-Strasse 38**
**D-67063 Ludwigshafen (DE)**

(72) Erfinder: **Filges, Ulrich, Dr.**
**Albert-Einstein-Allee 33**
**W-6703 Limburgerhof (DE)**
Erfinder: **Aydin, Oral, Dr.**
**Sophienstrasse 14**
**W-6800 Mannheim 1 (DE)**
Erfinder: **Auchter, Gerhard, Dr.**
**Paray-le-Monial-Strasse 10**
**W-6702 Bad Duerkheim (DE)**
Erfinder: **Barwich, Juergen, Dr.**
**Triftbrunnenweg 27**
**W-6730 Neustadt (DE)**
Erfinder: **Anders, Hermann**
**Gartenstrasse 35 a**
**W-6701 Meckenheim (DE)**
Erfinder: **Langer, Werner, Dr.**
**Wittelsbachstrasse 41**
**W-6700 Ludwigshafen (DE)**
Erfinder: **Vorspohl, Klaus, Dr.**
**Ruedigerstrasse 1**
**W-6700 Ludwigshafen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 493 673 B1

## Beschreibung

Die vorliegende Erfindung betrifft neue mit Luftfeuchtigkeit selbsthärtbare Mischungen Von Copolymerisaten auf der Basis Von Acrylsäure-, Methacrylsäure- und/oder Vinylestern mit vernetzungskomponenten folgenden Aufbaus bzw. folgender Zusammensetzung:

B) härtbare Mischungen aus

1) 50 bis 99,9 Gew.-% eines Copolymerisates B1 ( = 100 Gew.-%) aus

a) 30 bis 99,9 Gew.-% eines oder mehrerer $C_1$-$C_{24}$-Alkylester der Acryl- und/oder Methacrylsäure und/oder $C_1$-$C_{20}$-Vinylester (Verbindungen I),

b) 0,1 bis 50 Gew.-% eines radikalisch polymerisierbaren Carbonsäureanhydrids (Verbindungen III),

c) 0 bis 50 Gew.-% weiterer Monomerer (Verbindungen IV) und

d) 0 bis 5 Gew.-% der Verbindungen Va bzw Vb

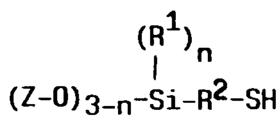

Va

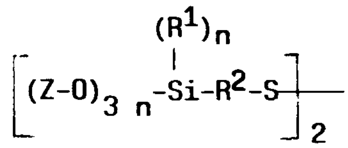

Vb

in der

n ein Wert von 0 bis 2 ist,

$R^1$ eine $C_1$-$C_6$-Alkylgruppe oder die Phenylgruppe bedeutet,

$R^2$ eine $C_1$-$C_{18}$-Alkylgruppe, die Cyclohexyl- oder Phenylgruppe bezeichnet,

Z für eine $C_1$-$C_{18}$-Alkylgruppe, $C_2$-$C_{18}$-Alkylengruppe oder $C_2$-$C_{18}$-Alkinylgruppe steht, deren Kohlenstoffatome durch nichtbenachbarte Sauerstoff- oder Halogenatome ersetzt sein Können, oder für eine der Gruppen

$-N=C(R^3)_2$ oder

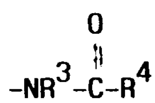 ,

in denen

$R^3$ eine $C_1$-$C_{12}$-Alkylgruppe bedeutet und

$R^4$ eine $C_1$-$C_{18}$-Alkylgruppe bezeichnet,

und

2) 0,1 bis 50 Gew.-% eines zwei- oder mehrwertigen Isocyanats (Verbindungen VI).

Außerdem betrifft die Erfindung die Verwendung dieser härtbaren Mischungen B als mit Luftfeuchtigkeit selbsthärtbare Kleb-, Dichtungs- und Beschichtungsmassen sowie mit Luftfeuchtigkeit selbsthärtbare Kleb-, Dichtungs- und Beschichtungsmassen, die die härtbaren Mischungen B enthalten.

Aus der älteren deutschen Anmeldung P 3913168 sind Copolymerisate auf der Basis von Alkylacrylaten und/oder -methacrylaten mit freien Isocyanatgruppen bekannt, die als Klebe-, Dichtungs- und Beschichtungsmassen empfohlen werden.

Diese Copolymerisate vermögen jedoch nicht ganz zu befriedigen, da ihr an sich gutes Fließverhalten noch weiter verbesserungsbedürftig ist.

Eine Verbesserung des Fließverhaltens durch Verwendung üblicher Mercaptan-Regler ist zwar beschrieben, ihr Einsatz bedingt jedoch gleichzeitig eine unzureichende Vernetzung bei Feuchtigkeitseinwirkung, insbesondere dann, wenn zur Erniedrigung des Molekulargewichtes hohe Regler-Konzentrationen benötigt werden.

Copolymerisate mit freien Isocyanatgruppen und zusätzlichen freien Anhydridgruppen sind in der DE-A-38 04 589 beschrieben.

Diese Copolymerisate eignen sich jedoch nur als Bindemittelkomponenten in Zweikomponenten-Beschichtungs- und Dichtungsmassen, welche als weitere Komponenten organische Polyhydroxylverbindungen enthalten.

Aus der DE-A 3 601 272 sind Klebstoffe aus mindestens zweiwertigen Isocyanaten und anhydridhaltigen Copolymerisaten, die aktiven Wasserstoff enthalten, bekannt. Diese Klebstoffe werden naturgemäß nur als Zweikomponentenkleber empfohlen, da beim Vermischen der Komponenten zum Einkomponentenkleber die aktivierten Copolymerisate umgehend mit den Isocyanaten reagieren würden. Diese Reaktion bedingt zudem eine unzureichende Topfzeit durch rasches Gelieren bei der Anwendung des Klebstoffes. Darüber hinaus führt diese Reaktion aufgrund von frühzeitiger Decarboxylierung zur Blasenbildung und zu hoher Oberflächenklebrigkeit der Klebstoffe im ausgehärteten Zustand.

Isocyanathaltige Copolymerisate aus hydroxylhaltigen Acrylaten und zwei- oder mehrwertigen Isocyanaten sind in der DE-A 29 15 864 als härtbare Einkomponenten-Dichtungsmittel beschrieben. Nachteilig ist sowohl die durch die hohe Vernetzungsdichte der ausgehärteten Dichtungsmaterialien bedingte abnehmende Elastizität nach längerer Lagerung als auch die durch Decarboxylierung hervorgerufene Blasenbildung.

Aus der DE-A 37 10 963 sind anhydridhaltige Copolymerisate mit zwei- oder mehrwertigen Aldiminen und/oder Ketiminen bekannt, die als feuchtigkeitshärtbare Bindemittelkombinationen empfohlen werden. Diese Bindemittel zeigen jedoch ein schlechtes Fließverhalten und neigen im ausgehärteten Zustand zur Oberflächenklebrigkeit.

Der vorliegenden Erfindung lag daher die Aufgabe zugrunde, neue Copolymerisate und Mischungen aus derartigen Copolymerisaten mit Vernetzungskomponenten bereitzustellen, die verbesserte anwendungstechnische Eigenschaften aufweisen und insbesondere als mit Luftfeuchtigkeit selbsthärtbare Kleb-, Dichtungs- und Beschichtungsmassen verwendet werden können.

Demgemäß wurden die eingangs definierten Mischungen B sowie ihre Verwendung als mit Luftfeuchtigkeit selbsthärtbare Kleb-, Dichtungs- und Beschichtungsmassen gefunden.

Weiterhin wurden mit Luftfeuchtigkeit selbsthärtbare Kleb-, Dichtungs- und Beschichtungsmassen gefunden, die die härtbaren Mischungen B enthalten.

Als Verbindungen I eignen sich $C_1$-$C_{24}$-Alkylester der Acryl- und/oder Methacrylsäure und/oder $C_1$-$C_{20}$-Vinylester. Besonders bevorzugte Verbindungen I sind die $C_1$-$C_4$-Alkylester der Acryl- und/oder Methacrylsäure, also z.B. Methyl-, Ethyl-, n-Propyl- und n-Butylacrylat und -methacrylat. Bevorzugt sind iso-Propyl-, iso-Butyl-, sec.-Butyl-, tert.-Butyl-, n-Pentyl-, n-Hexyl-, 2-Ethylhexyl-, Cyclohexyl-, n-Heptyl-, n-Octyl-, Phenylethyl- und Phenylpropylacrylat und -methacrylat. Weiterhin sind sauerstoffhaltige Alkylester der Acryl- und/oder Methacrylsäure wie 2-Ethoxyethyl-, 2-Butoxyethyl- und Furfurylacrylat und -methacrylat zu nennen. Daneben eignen sich Vinylester wie Vinylformiat, -acetat, -propionat, -butyrat, -laurat und -stearat.

Als Verbindung III kommen radikalisch polymerisierbare Carbonsäureanhydride in Betracht, bevorzugt Itaconsäureanhydrid, Citraconsäureanhydrid, Cyclohexendicarbonsäureanhydrid und besonders bevorzugt Maleinsäureanhydrid.

Zusätzliche weitere Monomere als Verbindungen IV sind vor allem Vinylaromaten wie $\alpha$-Methylstyrol, $\beta$-Methylstyrol, Vinyltoluole und tert.-Butylstyrole, Halogenstyrole wie Chlorstyrole, Vinylether von $C_1$-$C_8$-Alkanolen wie Ethylvinylether, Vinylester von $C_2$-$C_{12}$-Alkansäuren wie Vinylacetat und Vinylpropionat, Vinylhalogenide wie Vinylchlorid, niedere ungesättigte Kohlenwasserstoffe wie $\alpha$-Olefine oder konjugierte Kohlenwasserstoffe wie Butadien und Isopren.

Besonders bevorzugte Verbindungen IV sind Styrol und ungesättigte Nitrile wie vornehmlich Acryl- und Methacrylnitril.

Als Si-Regler eignen sich solche der allgemeinen Formel Va bzw. Vb

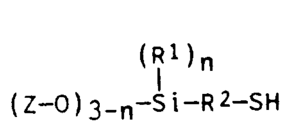

Va

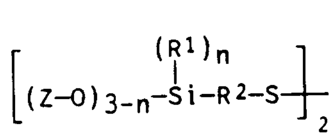

Vb

in der

n ein Wert von 0 bis 2 ist,

$R^1$ eine $C_1$-$C_6$-Alkylgruppe oder die Phenylgruppe bedeutet,

$R^2$ eine $C_1$-$C_{18}$-Alkylgruppe, die Cyclohexyl- oder Phenylgruppe bezeichnet,

Z für eine $C_1$-$C_{18}$-Alkylgruppe, $C_2$-$C_{18}$-Alkylengruppe oder $C_2$-$C_{18}$-Alkinylgruppe steht, deren Kohlenstoffatome durch nichtbenachbarte Sauerstoff- oder Halogenatome ersetzt sein können, oder für eine der Gruppen

$-N=C(R^3)_2$ oder

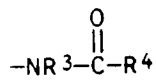 ,

in denen
$R^3$ eine $C_1$-$C_{12}$-Alkylgruppe bedeutet und
$R^4$ eine $C_1$-$C_{18}$-Alkylgruppe bezeichnet.

Besonders bevorzugt sind die Verbindungen Va, darunter vor allem Mercaptopropyltrimethoxysilan und Mercaptopropyltriethoxysilan.

Die erfindungsgemäßen härtbaren Mischungen B werden aus 50 bis 99,9 Gew.-%, vorzugsweise 70 bis 99 Gew.-% eines Copolymerisates B1 und 0,1 bis 50 Gew.-%, vorzugsweise 1 bis 30 Gew.-% eines zwei- oder mehrwertigen Isocyanates als Verbindung VI hergestellt.

Die Copolymerisate B1 bestehen ihrerseits aus 30 bis 99,9 Gew.-%, vorzugsweise 38 bis 98,4 Gew.-% der Verbindungen I und 0,1 bis 50 Gew.-%, vorzugsweise 1,5 bis 10 Gew.-% der Verbindungen III. Außerdem können die Copolymerisate B1 bis zu 50 Gew.-% der Verbindungen IV und bis zu 5 Gew.-% der Verbindungen Va bzw. Vb enthalten. Bei Mitverwendung der Verbindungen Va bzw. Vb ist eine Menge von 0,1 bis 2 Gew.-% bevorzugt.

Im Hinblick auf die mit Luftfeuchtigkeit selbsthärtbaren Kleb-, Dichtungs- und Beschichtungsmassen besonders bevorzugte Copolymerisate B1 sind solche aus

a) 90 bis 95 Gew.-% der Verbindungen I und
b) 5 bis 10 Gew.-% der Verbindungen III.

Besonders bevorzugte härtbare Mischungen B sind solche aus

1) 95 bis 99 Gew.-% eines Copolymerisates B1 (= 100 Gew.-%) und
2) 1 bis 5 Gew.-% eines zwei- oder mehrwertigen Isocyanats (Verbindungen VI).

Als Verbindungen VI eignen sich zwei- oder mehrwertige Isocyanate, bevorzugt solche mit Isocyanatgehalten von 1 bis 60 Gew.-% NCO, besonders bevorzugt 5 bis 40 Gew.-% NCO.

Besonders bevorzugte Verbindungen VI sind Triisocyanate wie Tris-[4-isocyanat-phenyl]-methan und vor allem solche aus der Triisocyanuratreihe wie 2,4,6-Trioxo-1,3,5-tris-[3-isocyanat-4-methyl-phenyl]-hexahydro-1,3,5-triazin, 2,4,6-Trioxo-1,3,5-tris-[6-isocyanat-1-hexyl]-hexahydro-1,3,5-triazin und 2,4,6-Trioxo-1,3,5-tris-[5-isocyanat-1,3,3-trimethyl-cyclohexyl-methyl]-hexahydro-1,3,5-triazin. Daneben eignen sich 2-Ethyl-1,2,3-tris-[3-isocyanat-4-methyl-anilinocarbonyl-oxy]-propan und 2,4-Bis-[4-isocyanat-benzyl]-1-isocyanat-benzol.

Bevorzugte Verbindungen VI sind Diisocyanate wie vor allem 1,6-Bis-[isocyanat]-hexan, 2,4-Bis-[isocyanat]-toluol, 2,6-Bis-[isocyanat]-toluol, Bis-[4-isocyanatphenyl]-methan und ganz besonders 5-Isocyanat-3-(isocyanatmethyl)-1,1,3-trimethylcyclohexan (Isophorondiisocyanat). Daneben eignen sich 1,4-Bis-[2-isocyanatethyl]-cyclohexan und 1,3-Bis-[isocyanatmethyl]-cyclohexan.

Als Verbindungen VI kommen weiterhin Di- oder Triisocyanate von Allophanaten, Carbodiimiden, Uretdionen und vor allem Biureten wie Bis-[6-isocyanat-hexylaminocarbonyl]-(6-isocyanat-hexyl)-amin in Betracht.

Außerdem eignen sich als Verbindungen VI Polyurethan-Prepolymere aus Polyisocyanaten und Polyolen. Bevorzugt sind Polyurethan-Prepolymere mit Isocyanatgehalten von 1 bis 30 Gew.-% NCO, vorzugsweise 5 bis 20 Gew.-% NCO.

Bevorzugte Polyisocyanate sind Di- und Triisocyanate. Bevorzugte Polyole sind solche mit Funktionalitäten von 2 bis 3, vorzugsweise 2 und Molekulargewichten von 1000 bis 8000, vorzugsweise 1800 bis 6000. Bevorzugt sind Polythioetherpolyole, Polyesteramide, hydroxylgruppenhaltige Polyacetale und hydroxylgruppenhaltige aliphatische Polycarbonate. Besonders bevorzugt sind Polyesterpolyole und vor allem Polyetherpolyole, darunter insbesondere solche mit einer Funktionalität von 2 und Molekulargewichten von 1800 bis 4000.

Die Polyetherpolyole werden im allgemeinen durch anionische Polymerisation mit Alkalihydroxiden oder Alkalialkoholaten oder durch kationische Polymerisation mit Lewis-Säuren als Katalysatoren aus Alkylenoxiden und gegebenenfalls Startern hergestellt.

Bevorzugte Alkylenoxide sind Tetrahydrofuran, 1,3-Propylenoxid, 1,2- und 2,3-Butylenoxid, Styroloxid und Epichlorhydrin. Besonders bevorzugt sind Ethylenoxid und 1,2-Propylenoxid.

Als Starter eignen sich Wasser, organische Dicarbonsäuren wie Bernsteinsäure, Adipinsäure, Phthalsäure und Terephthalsäure, Alkanolamine wie Ethanolamin, Diethanolamin und Triethanolamin sowie Ammoniak. Bevorzugte Starter sind zwei- und dreiwertige Alkohole wie Ethandiol, 1,2- und 1,3-Propandiol, Diethylenglykol, Dipropylenglykol, Butandiol-1,4, Hexandiol-1,6, Trimethylolpropan und besonders bevorzugt

Glycerin.

Die Copolymerisate B1, und E1 werden durch radikalische Polymerisation wie Masse- oder Lösungspolymerisation hergestellt, wobei die Polymerisation in Lösung bevorzugt ist.

Als Lösungsmittel werden in der Regel Ether wie Tetrahydrofuran und Dioxan, Ester wie Essigsäureethylester und -propylester sowie n-Butylacetat, Glykoletheracetate wie Methyl-, Ethyl- und Butylglycolacetat, Ketone wie Aceton und Cyclohexanon, Dialkylcarbonsäureamide wie Dimethylformamid, Dimethylacetamid und N-Methylpyrrolidon, Aromaten wie Toluol und die Xylole, aliphatische Kohlenwasserstoffe wie Isooctan und chlorierte Kohlenwasserstoffe wie tert.-Butylchlorid verwendet.

Es ist ebenso möglich, als Lösungsmittel einen Weichmacher als Polymerisationsmedium zu verwenden.

Als Initiatoren für die radikalisch ablaufende Polymerisationsreaktion können die üblichen Peroxo- oder Azoverbindungen, auch in Kombination mit Reduktionsmitteln, zweckmäßigerweise in Mengen von 0,05 bis 10 Gew.-%, bezogen auf das Gewicht der Monomeren, eingesetzt werden.

Als bevorzugte Initiatoren sind Dibenzoylperoxid, tert.-Butylperpivalat, tert.-Butylper-2-ethylhexanoat, Ditert.-butylperoxid, tert.-Butylhydroperoxid, Cumolhydroperoxid, Dilaurylperoxid, tert.-Butylperoximaleinat, tert.-Butylperoxibenzoat, Dicumylperoxid, Didecanoylperoxid, Methylethylketonperoxid, 2,2'-Azobis-(2,4-dimethylvaleronitril), 2,2'-Azobis-(2,3-dimethylbutyronitril) und 2,2'-Azobisisobutyronitril zu nennen. Daneben eignen sich silangruppentragende Azoinitiatoren (EP-A 159 710). Besonders bevorzugte Initiatoren für die Polymerisation der Copolymerisate C2 und E1 sind hydroxylhaltige Initiatoren wie Azo-bis-cyanopentanol und 2,2'-Azo-bis[2-methyl-N-(2-hydroxyethyl)-propionamid].

Bevorzugte Reduktionsmittel sind Hydrazin, Natriumsulfit, Natriumhydrogensulfit, Kaliumsulfit, Kaliumhydrogensulfit, Ammoniumsulfit und Ammoniumhydrogensulfit, die in Mengen von 0,005 bis 2 Gew.-% eingesetzt werden.

Zur Steuerung der Molekularmasse können in den Copolymerisaten, die keinen Si-Regler Va bzw. Vb enthalten, übliche Regler zugesetzt werden. Bevorzugte Regler sind Tetrachlorkohlenstoff, Tetrabromkohlenstoff, Benzylbromid, Trichlorbrommethan, Butylmercaptan, n-Dodecylmercaptan, tert.-Dodecylmercaptan, Thiophenol und Thioglykolsäurealkylester wie Thioglykolsäuremethyl- und ethylester.

Im allgemeinen führt man die Polymerisation bei 0 bis 200 °C, vorzugsweise bei 60 bis 130 °C durch.

Zweckmäßigerweise wird die Umsetzung bei Normaldruck vorgenommen, jedoch kann man auch bei vermindertem oder leicht erhöhtem Druck arbeiten, also etwa im Bereich von 0,5 bis 5 bar.

Die Reaktionszeiten betragen normalerweise 1 bis 30, meistens 3 bis 6 Stunden.

Verfahrenstechnisch geht man bei der Lösungspolymerisation in der Regel so vor, daß man einen Teil des Lösungsmittels, gegebenenfalls mit Trocknungsmittel und/oder einem Teil der Monomeren III auf die Reaktionstemperatur erhitzt und die Monomermischung, den Regler und Initiator sowie die Restmenge des Lösungsmittels kontinuierlich zuführt, bevorzugt gleichzeitig in getrennten Zuläufen.

Bei der Massepolymerisation wird im allgemeinen ein Teil des Polymerisationsansatzes vorgelegt, auf die Polymerisationstemperatur erhitzt, wonach anschließend der Rest kontinuierlich zugeführt wird.

Nach beendetem Zulauf setzt man die Polymerisation, gegebenenfalls unter Zusatz weiterer Initiatormengen, noch etwa für eine Zeit von 2 Stunden fort, um Restmonomerengehalte abzusenken. Man kann die Restmonomeren aber ebenso durch Destillation des Lösungsmittels entfernen.

Vorzugsweise wählt man die Polymerisationsbedingungen in an sich bekannter Weise so, daß der Polymerisationsgrad der erfindungsgemäßen Copolymerisate B1 K-Werten von 7 bis 150, besonders 10 bis 100 und vor allem 17 bis 60 entspricht. Für die Copolymerisate C1 werden K-Werte von 10 bis 150, insbesondere von 20 bis 90 bevorzugt, für die Copolymerisate C2 werden K-Werte im Bereich von 8 bis 60, besonders von 10 bis 40 bevorzugt. Bevorzugte K-Werte der Copolymerisate E1 liegen zwischen 8 und 80, besonders bei 10 bis 50 und vor allem zwischen 12 und 35.

Die K-Werte sind relative Viskositätszahlen, die in Analogie zur DIN 53726 bei 25 °C bestimmt werden. Die K-Werte der Copolymerisate B1 mit Si-Regler-Anteilen werden in Toluol gemessen, die Bestimmung der K-Werte der übrigen Copolymerisate erfolgt in Tetrahydrofuran.

Zur Herstellung der erfindungsgemäßen härtbaren Mischungen B werden die lösungsmittelenthaltenen Copolymerisate B1 ohne Si-Regler und die Verbindungen VI bei 0 bis 200 °C, vorzugsweise 25 bis 120 °C gemischt. Bei Verwendung der lösungsmittelfreien Copolymerisate B1 ohne Si-Regler wird das Mischen bei 20 bis 200 °C, vorzugsweise bei 80 bis 150 °C vorgenommen. Die härtbaren Mischungen B aus den lösungsmittelenthaltenen Copolymerisaten B1 mit Si-Regler-Anteilen und den Verbindungen VI werden bei 20 bis 150 °C, vorzugsweise bei 20 bis 60 °C gemischt. Bei Verwendung der lösungsmittelfreien Copolymerisate B1 mit Si-Regler wird das Mischen bei 0 bis 200 °C, vorzugsweise bei 20 bis 150 °C und insbesondere bei 60 bis 120 °C vorgenommen.

Die härtbaren Mischungen B gemäß der Erfindung können als mit Luftfeuchtigkeit selbsthärtbare Kleb-, Dichtungs- und Beschichtungsmassen verwendet werden und werden als solche bevorzugt lösungsmittelfrei eingesetzt.

Die mit Luftfeuchtigkeit selbsthärtbaren Kleb-, Dichtungs- und Beschichtungsmassen können noch übliche Zusatzstoffe, im allgemeinen in Mengen bis zu 400 Gew.-%, bezogen auf die härtbaren Mischungen enthalten.

Übliche Zusatzstoffe sind beispielsweise Weichmacher, Füllstoffe, Verstärkungsmittel, Härtungsbeschleuniger und Lösungsmittel.

Bevorzugte Weichmacher zur Erniedrigung der Glastemperatur und der Viskosität sind Phthalsäureester wie Diethyl-, Di-n-butyl-, Di-isoheptyl-, Di-(2-ethylhexyl)- und Butylbenzylphthalat, Adipinsäureester wie Di-2-ethylhexyl- und Di-iso-octyladipat, Sebacinsäureester wie Di-(2-ethylhexyl)- und Dioctylsebacinat, Polyalkylenglykolester wie Di- und Triethylenglykoldibenzoat, Phosphorsäureester wie Tri-n-butyl-, Tri-isobutyl- und Tri-(β-chlorethyl)phosphat, chlorierte Kohlenwasserstoffe, Alkyldiphenyle und partiell hydrierte Terphenyle.

Die Weichmacher werden üblicherweise in Mengen von 1 bis 20 Gew.-% eingesetzt.

Bevorzugte Füllstoffe und Verstärkungsmittel sind hydrophobiertes Calciumcarbonat, Magnesiumcarbonat, Talk, Titandioxid, Bariumsulfat, Aluminiumoxid, hydrophobiertes Siliciumdioxid, Metallpulver wie Zink- und Eisenpulver, Bentonit, Kaolin und Ruß, die im allgemeinen in Mengen bis zu 300 Gew.-%, vorzugsweise bis zu 100 Gew.-% eingesetzt werden.

Die Füllstoffe werden in der Regel in feiner Körnung zugegeben, wobei die durchschnittliche Korngröße vorzugsweise 0,01 bis 200 µm, insbesondere 0,01 bis 10 µm beträgt.

Bevorzugte Härtungsbeschleuniger für die Umsetzung der freien Isocyanatgruppen sind organische Metallverbindungen wie Bis-[dodecanoyloxyl-di-butyl-zinn, Bis-[dodecanoyloxy]-dioctyl-zinn, Zinnoctylat, Manganoctylat und Monobutylzinnoxid, Aminverbindungen wie N,N-Dimethylcyclohexylamin, Tri-n-butylamin, Triethylendiamin, N,N-Dimethylbenzylamin und 1,8-Diazobicyclo-[5.4.6]-undecen-7 sowie deren Salze, z.B. die Hydrochloride.

Die Härtungsbeschleuniger werden im allgemeinen in Mengen von 0,01 bis 10 Gew.-% verwendet.

Lösungsmittel werden bevorzugt dann zugesetzt, wenn die Copolymerisate durch Massenpolymerisation hergestellt wurden oder das Lösungsmittel nach der Lösungsmittelpolymerisation zusammen mit den Restmonomeren abdestilliert wurde. Bevorzugte Lösungsmittel zur Verbesserung der Verarbeitbarkeit und zur Erniedrigung der Viskosität sind solche, die bereits für die Polymerisation verwendet wurden, beispielsweise aromatische Kohlenwasserstoffe wie Toluol und Xylol und Ketone wie Aceton und Methylethylketon, die üblicherweise in Mengen bis zu 50 Gew.-% eingesetzt werden.

Zur Erniedrigung der Viskosität lösungsmittelfreier Massen können diese auf bis zu 150 °C, bevorzugt auf bis zu 100 °C erwärmt und im erwärmten Zustand angewendet werden, wodurch eine hohe Anfangshaftung erreicht wird.

Die erfindungsgemäßen Massen können in Form von Einkomponentensystemen hergestellt werden, indem man alle Bestandteile miteinander vermischt und in einem abgedichteten Behälter gebrauchsfertig lagert. Sie können aber auch als Zweikomponentensysteme verwendet werden, bei denen die Copolymerisate und die Vernetzungskomponenten getrennt gelagert und erst kurz vor der Anwendung zusammengerührt werden.

Im Falle eines Einkomponentensystems muß besonders sorgfältig auf den Ausschluß von Wasser geachtet werden, um vorzeitiges Aushärten zu vermeiden.

Im Falle eines Zweikomponentensystems ist die Anwesenheit geringer Spuren Wasser in den Ausgangs- und Zusatzstoffen weniger kritisch, was sowohl die Verarbeitung der Ausgangsstoffe als auch die Lagerung des Zweikomponentensystems erleichtert.

Die erfindungsgemäßen härtbaren Mischungen B finden als mit Luftfeuchtigkeit selbsthärtbare Kleb-, Dichtungs- und Beschichtungsmassen Verwendung.

Als solche eignen sie sich zum Verkleben von organischen und anorganischen Materialien untereinander oder miteinander, zum Abdichten sowie zum Beschichten solcher Materialien wie z.B. Metall, Holz, Glas, Keramik, Stein, Beton, Kunststoffen, Textilien, Leder, Pappe und Papier.

Die Massen gemäß der Erfindung härten bei Einwirkung von Luftfeuchtigkeit innerhalb kurzer Zeit aus und weisen im gehärteten Zustand eine erhöhte Elastizität und Dehnfähigkeit, jedoch keine Oberflächenklebrigkeit auf. Sie zeigen darüber hinaus im gehärteten Zustand ein erhöhtes Haftvermögen auf Untergrundmaterialien wie Aluminium, Holz, Glas, Keramik, Beton, Mauerwerk sowie den meisten Kunststoffen.

Beispiele

Die Verbindungen I, II, III, IV, V, VII und R bilden zusammen jeweils 100 Gew.-% und entsprechen der Zusammensetzung des Polymerisats. Die Gewichtsangabe des Initiators I in Gew.-% bezieht sich jeweils auf das Polymerisat. Die Gewichtsangaben des Lösungsmittels L und des Trocknungsmittels T beziehen sich auf die gesamte Polymerlösung.

Herstellung von Copolymerisaten A

Eine Lösung aus 2 g (0,2 Gew.-%) Triethylorthoformiat in 200 g (20 Gew.-%) Toluol wurde nach dem Erhitzen auf 100 °C im Laufe von 4 Stunden mit einer Mischung der Verbindungen I, II und gegebenenfalls III und IV als Zulauf 1, mit den Verbindungen V in 100 g (10 Gew.-%) Toluol als Zulauf 2 sowie im Laufe von 5 Stunden mit dem Initiator in 100 g (10 Gew.-%) Toluol als Zulauf 3 versetzt, wobei die Zuläufe gleichzeitig, aber getrennt zugegeben wurden.

Danach wurde 2 Stunden bei 100 °C nachpolymerisiert, und anschließend wurden das Lösungsmittel sowie noch vorhandene Restmonomere bei 100 °C im Vakuum abdestilliert.

Anwendungstechnische Eigenschaften

Als anwendungstechnische Eigenschaften der copolymerisate A wurden die Schälfestigkeit und Viskositätseigenschaften ermittelt.

A) Bestimmung der Schälfestigkeit

Zur Bestimmung der Schälfestigkeit wurden in je 400 g (99,5 Gew.-%) der auf 100 °C erwärmten Copolymerisate A/1, A/6 und A/9 bzw. der auf 80 °C erwärmten Copolymerisate A/15 und A/16 2 g (0,5 Gew.-%) Bis-[dodecanoyloxy]-dibutyl-zinn untergerührt und 300 g (74,6 Gew.-%) dieser Masse im erwärmten Zustand in eine Plastikhülse gegossen und luftdicht verschlossen. Nach 2 Wochen Lagerung wurde die geschlossene Hülse auf 80 °C erwärmt, wonach die Masse entnommen und mit einer Schichtdicke von 0,5 mm auf Baumwollstoff glatt aufgetragen wurde. Anschließend wurden verschiedene Materialien aufgelegt und angepreßt. Nach 8 Tagen Lagerung bei Raumtemperatur wurde der Baumwollstoff abgezogen, wobei die Schälfestigkeit als diejenige Kraft gemessen wurde, die notwendig ist, die Materialien wieder zu trennen.

Beispiele B/1 bis B/37

B) Herstellung von härtbaren Mischungen B

1) Herstellung von Copolymerisaten B1

1a) Herstellung von Copolymerisaten B1 mit Si-Reglern als Verbindungen V

Die Copolymerisate B1 mit Si-Reglern wurden analog den Copolymerisaten A hergestellt.

Tabelle 3 zeigt die Zusammensetzungen der Zuläufe 1, 2 und 3 sowie die in THF gemessenen K-Werte der Copolymerisate und die Feststoffgehalte der erhaltenen Copolymerisatlösungen vor der Destillation.

1b) Herstellung von Copolymerisaten B1 ohne Si-Regler als Verbindungen V

Eine Vorlage V wurde nach dem Erhitzen auf 110 °C bei Verwendung von Toluol als Lösungsmittel bzw. 75 °C bei Verwendung von Essigsäureethylester als Lösungsmittel im Laufe von 3 Stunden mit dem Zulauf 1 und im Laufe von 3,5 Stunden mit dem Zulauf 2 versetzt, wobei die Zuläufe gleichzeitig, aber getrennt zugegeben wurden.

Danach wurde 1 Stunde bei 120 °C nachpolymerisiert, oder es wurden im Falle der Copolymerisate B1/14 und B1/19 noch 5,5 g (1,1 Gew.-%) bzw. 4 g (0,7 Gew.-%) tert.-Butyl-per-2-ethylhexanoat zugesetzt, wonach 3 Stunden bei 80 °C bzw. 2 Stunden bei 140 °C nachpolymerisiert wurde. Im Falle des Copolymerisates B1/21 wurde anschließend so viel Toluol abdestilliert, daß eine 80 %ige Lösung entstand, im Falle des Copolymerisates B1/12 wurde hingegen das Lösungsmittel zunächst vollständig destillativ entfernt, wonach das Copolymerisat erneut in Toluol aufgenommen wurde, so daß eine 60 %ige Lösung entstand. Im Falle der Copolymerisate B1/14 und B1/15 wurde das Lösungsmittel vollständig abdestilliert.

Tabelle 4 zeigt die Zusammensetzungen der Vorlage V und der Zuläufe 1 und 2 sowie die in THF gemessenen K-Werte der Copolymerisate und die Feststoffgehalte der erhaltenen Copolymerisatlösungen vor der Destillation.

Zum Vergleich sind als Beispiel V1/18, V1/19, V1/20 und V1/21 die entsprechenden Werte für vier Copolymerisate mit aktivem Wasserstoff angegeben, wobei das Vergleichsbeispiel V1/18 gemäß dem Acrylklebstoff A der DE-A-36 01 272 und die Vergleichsbeispiele V1/19, V1/20 und V1/21 gemäß deren allgemeinen Lehre durchgeführt wurden.

2) Herstellung von isocyanathaltigen Prepolymeren als Verbindungen VI

Zu a Gew.-% eines Diisocyanates VI wurden bei 80 ° C in einer Stickstoffatmosphäre innerhalb von 1 Stunde b Gew.-% eines Polyoxyalkylenpolyols mit einer OH-Zahl von Z, hergestellt aus einem Alkylenoxid Alk an einem Starter S, und 0,1 g (0,01 Gew.-%) Benzoylchlorid zugesetzt. Anschließend wurde eine weitere Stunde bei 80 ° C gerührt.

Die Einzelheiten dieser Versuche sowie deren Ergebnisse sind der Tabelle 5 zu entnehmen.

3) Herstellung von härtbaren Mischungen B

Zu a Gew.-% der auf T ° C erwärmten Copolymerisate B1 wurden b Gew.-% der Verbindungen VI sowie 0,5 Gew.-% Bis-[dodecanoyloxy]-dibutyl-zinn bzw. in den Mischungen B/33 und B/34 1,4-Diazabicyclo-[2,2,2]-octan zugegeben.

Die Einzelheiten dieser Versuche sind der Tabelle 6 zu entnehmen.

Zum Vergleich sind die Beispiele V/25, V/26, V/36 und V/37 aufgeführt, wobei das Vergleichsbeispiel V/25 gemäß Beispiel 37 der DE-A-36 01 272 und die Vergleichsbeispiele V/26, V/36 und V/37 gemäß deren allgemeinen Lehre durchgeführt wurden.

Anwendungstechnische Eigenschaften

Als anwendungstechnische Eigenschaften der erfindungsgemäßen härtbaren Mischungen B wurden die Schälfestigkeit, Reißdehnung und Reißfestigkeit ermittelt.

Weiterhin wurden die Oberflächenklebrigkeit, Verarbeitbarkeit und Zahl der Luftblaseneinschlüsse der erfindungsgemäßen Mischungen B/25, B/26, B/36 bzw. B/37 im Vergleich zu den Beispielen V/25, V/26, V/36 bzw. V/37 geprüft.

A) Bestimmung der Schälfestigkeit

Zur Bestimmung der Schälfestigkeit wurden die härtbaren Mischungen B/1 bis B/6 entsprechend den Copolymerisaten A behandelt.

Tabelle 7 zeigt die Ergebnisse dieser Prüfung. In allen Fällen zeigten die erfindungsgemäßen härtbaren Mischungen B hohe Schälfestigkeiten.

Zur Bestimmung der schälfestigkeit der härtbaren Mischungen B/13 und B/14 wurden diese im erwärmten Zustand in Plastikhülsen gegossen und luftdicht verschlossen. Nach 1 Woche Lagerung wurde die geschlossene Hülse auf 80 ° C erwärmt, wonach die Masse entnommen und mit einer Schichtdicke von 1 mm auf Aluminiumfolie aufgetragen wurde. Anschließend wurde ein Baumwolltuch aufgelegt und angepreßt. Nach jeweils 4 bzw. 24 Stunden Lagerung bei Raumtemperatur und relativer Luftfeuchtigkeit von 60 % wurde das Baumwolltuch abgezogen, wobei die Schälfestigkeit gemessen wurde.

Tabelle 8 zeigt die Ergebnisse dieser Prüfung. In beiden Fällen wurde die schälfestigkeit während der Dauer von 20 Stunden zwischen den Messungen verdoppelt.

B) Bestimmung der Reißdehnung und Reißfestigkeit

Zur Bestimmung der Reißdehnung und Reißfestigkeit wurden aus den härtbaren Mischungen B/7 bis B/12, B/15 bis B/24 und B/27 bis B/35 1 mm dicke Folien durch Auftragen auf Silikonpapier hergestellt, die 3 Wochen bei Raumtemperatur gelagert wurden. Anschließend wurden aus den Folien Probekörper ausgestanzt, wonach die Reißdehnung und Reißfestigkeit nach DIN 53 504 bei einer Vorschubgeschwindigkeit von 100 mm/min unter Verwendung des Probekörpers S3A gemessen wurden.

Tabelle 6 zeigt die Ergebnisse dieser Prüfungen. In allen Fällen zeigten die erfindungsgemäßen Mischungen B hohe Elastizitäten.

C) Prüfung der Oberflächenklebrigkeit

Zur Prüfung der Oberflächenklebrigkeit wurden von den Mischungen B/25 und V/25 Filme mit einer Schichtdicke von 2 mm hergestellt und diese 2 Wochen an der Luft getrocknet.

Nach dieser Zeit zeigte der getrocknete Film der erfindungsgemäßen Mischung B/25 eine deutlich geringere Oberflächenklebrigkeit als der Film der Vergleichsmischung V/25.

D) Prüfung der Verarbeitbarkeit

Zur Prüfung der Verarbeitbarkeit wurden die Mischungen B/26 und V/26 direkt nach Zugabe der Verbindung VI/10 beobachtet.

Während die erfindungsgemäße Mischung B/26 auch nach einer Dauer von 4 Stunden noch verarbeitet werden konnte, gelierte die Vergleichsmischung V/26 bereits nach 1 Stunde.

E) Prüfung der Zahl der Luftblaseneinschlüsse

Zur Prüfung der Zahl der Luftblaseneinschlüsse wurden die Mischungen B/36, B/37, V/36 und V/37 mit einer Schichtdicke von 0,5 cm auf Silikonpapier aufgetragen.

Bei den Vergleichsmischungen V/36 und V/37 trat bereits nach 15 Minuten eine starke Blasenentwicklung auf, die sich während der Dauer von 1 Woche verstärkte.

Die erfindungsgemäßen Mischungen B/36 und B/37 zeigten hingegen nach 15 Minuten keinerlei Veränderungen und nach 1 Woche nur wenig Luftblaseneinschlüsse.

Bedeutung der Abkürzungen in den Tabellen

Verbindungen I

I/1 = Methylacrylat
I/2 = Ethylacrylat
I/3 = n-Butylacrylat
I/4 = Ethylhexylacrylat
I/5 = Methylmethacrylat

Verbindungen II

II/1 = 5-Isocyanato-3-oxapentylmethacrylat
II/2 = Isocyanatoethylacrylat

Verbindungen III

III/1 = Maleinsäureanhydrid
III/2 = Itaconsäureanhydrid

Verbindungen IV

IV/1 = Acrylnitril
IV/2 = Styrol
IV/3 = Vinylacetat

Verbindungen V

V/1 = Mercaptopropyltrimethoxysilan
V/2 = Mercaptopropyltriethoxysilan

Verbindungen VI

VI/1 = Prepolymer 1 )
VI/2 = Prepolymer 2 ) siehe Tabelle 5

VI/3 = Prepolymer 3 )
VI/4 = Prepolymer 4 )
VI/5 = 5-Isocyanat-3-(isocyanatmethyl)-1,1,3-trimethylcyclohexan (Isophorondiisocyanat)
VI/6 = Bis-[4-isocyanatphenyl]-methan
VI/7 = 2,4-Bis-[isocyanat]-toluol
VI/8 = 1,6-Bis-[isocyanat]-hexan
VI/9 = Bis-[6-isocyanat-hexylaminocarbonyl]-(6-isocyanat-hexyl)-amin, Isocyanatgehalt 23 Gew.-%
IV/10 = 2,4,6-Trioxo-1,3,5-tris-[6-isocyanat-1-hexyl]-hexahydro-1,3,5-triazin, Isocyanatgehalt 22 Gew.-%

Alkylenoxide Alk

Alk/1 = Ethylenoxid
Alk/2 = 1,2-Propylenoxid

Starter S

S/1 = Glycerin
S/2 = Dipropylenglykol

Lösungsmittel L

L/1 = Toluol
L/2 = Essigsäureethylester
L/3 = Cyclohexan

Initiatoren I

I/1 = 2,2'-Azobisisobutyronitril
I/2 = tert.-Butylper-2-ethylhexanoat
I/3 = tert.-Butylperoctoat

Regler R

R/1 = Mercaptoethanol
R/2 = Thioglykolsäureethylester
R/3 = Thioglycerin
R/4 = tert.-Dodecylmercaptan
R/5 = tert.-Mercaptoessigsäuremethylester

Trocknungsmittel T

T/1 = Triethylorthoformiat
T/2 = Tetraethoxysilan

Urethanisierungskatalysatoren U

U/1 = Bis-[dodecanoyloxy]-dibutyl-zinn
U/2 = Bis-[ethylhexanoyloxy]-zinn
U/3 = 1,4-Diaza-bicyclo[2.2.2]-octan

Füllstoffe und Verstärkungsmittel F

F/1 = hydrophobiertes Calciumcarbonat
F/2 = hydrophobiertes Siliciumdioxid
F/3 = Titandioxid

Tabelle 3

Copolymerisate B1 mit Si-Reglern als Verbindungen V

| | B1/1 | B1/2 | B1/3 | B1/4 | B1/5 | B1/6 | B1/7 | B1/8 | B1/9 |
|---|---|---|---|---|---|---|---|---|---|
| Zulauf 1: | | | | | | | | | |
| I/1 | | | | | | | 20 | 30 | |
| I/2 | 92 | 93,5 | | 90 | 91,5 | 88 | 72,5 | | 95 |
| I/3 | | | 63 | | | | | 40 | |
| I/4 | | | | | | | | 10 | |
| I/5 | | | 30 | | | | | 15 | |
| III/1 | 6 | 6 | 6 | 8 | 8 | 6 | 6 | 3 | 4 |
| IV/1 | | | | | | 5 | | | |
| IV/2 | | | | | | | 1 | | |
| Zulauf 2: | | | | | | | | | |
| V/1 | 2 | 0,5 | | 2 | | 1 | 0,5 | 2 | 1 |
| V/2 | | | 1 | | 0,5 | | | | |
| Zulauf 3: | | | | | | | | | |
| I/1 | 0,5 | 0,5 | 0,5 | 0,5 | 0,5 | 0,5 | 0,5 | | 0,6 |
| I/2 | | | | | | | | 0,8 | |
| K-Wert | 17,4 | 23,5 | 20,6 | 17,2 | 23,5 | 20,1 | 23,7 | 18 | 22 |
| Feststoff-gehalt | 59,8 | 59,9 | 59,8 | 60 | 60 | 59,2 | 59,9 | 59,8 | 60 |

Tabelle 4

Copolymerisate B1 ohne Si-Regler als Verbindungen V

| | B1/10 | B1/11 | B1/12 | B1/13 | B1/14 | B1/15* | B1/16 | B1/17 | B1/18 | V1/18[1] |
|---|---|---|---|---|---|---|---|---|---|---|
| **Vorlage V:** | | | | | | | | | | |
| III/1 | 2 | 2 | 8 | 1 | 2 | 4 | 5 | | 2 | 2 |
| L/1 | 30 | 30 | 30 | 30 | 25 | 25 | 30 | 30 | 30 | 20 |
| L/2 | | | | | | | | | | |
| T/1 | | | | | | 0,2 | | | | |
| T/2 | | | | | | | | | | |
| **Zulauf 1:** | | | | | | | | | | |
| I/2 | 52 | 68 | | | 96 | 92 | | 92 | | |
| I/3 | | | 58 | 98 | | | 95 | | 98 | 98 |
| I/5 | 43 | 27 | | | | | | | | |
| III/1 | | | | 1 | 2 | 4 | | 8 | | |
| IV/2 | 3 | 3 | | | | | | | | |
| IV/3 | | | 34 | | | | | | | |
| L/1 | | | | | | | | | | |
| **Zulauf 2:** | | | | | | | | | | |
| L/1 | 10 | 10 | 10 | 10 | 10 | 15 | 10 | 10 | 10 | |
| L/2 | | | | | | | | | | |
| I/1 | 0,3 | 0,3 | 0,3 | 0,3 | 1 | 1 | 0,3 | | 0,3 | |
| I/2 | | | | | | | | 3,3 | | |
| K-Wert | 38,8 | 42,3 | 40 | 26,1 | 25,7 | 27 | 29,1 | 18,9 | 31,9 | - |
| Feststoff-gehalt | 58,5 | 59,5 | 57 | 59 | 60 | 59,9 | 59 | 59,5 | 59 | - |

* besonders bevorzugte Copolymerisate
1) gemäß Acrylklebstoff A der DE-A-36 01 272
2) gemäß der DE-A-36 01 272

Tabelle 4 (Fortsetzung)

| | B1/19 | V1/19[2] | B1/20* | V1/20[2] | B1/21 | V1/21[2] |
|---|---|---|---|---|---|---|
| **Vorlage V:** | | | | | | |
| III/1 | 1 | 2 | 4 | 8 | 4 | 8 |
| L/1 | | | 30 | 20 | 30 | 10 |
| L/2 | 35 | 25 | | | | |
| T/1 | | | | | | |
| T/2 | 0,1 | | | | | |
| **Zulauf 1:** | | | | | | |
| I/2 | 98 | 98 | 92 | 92 | 92 | 92 |
| I/3 | | | | | | |
| I/5 | | | | | | |
| III/1 | 1 | | 4 | | 4 | |
| IV/2 | | | | | | |
| IV/3 | | | | | | |
| L/1 | | | | | | |
| **Zulauf 2:** | | | | | | |
| L/1 | | | 10 | | 10 | |
| L/2 | 15 | | | | | |
| I/1 | 0,6 | | 0,5 | | 0,5 | |
| I/2 | | | | | | |
| K-Wert | 55,9 | - | 54,5 | - | 28 | - |
| Feststoffgehalt | 49,5 | - | 59,5 | - | 59 | - |

* besonders bevorzugte Copolymerisate
1) gemäß Acrylklebstoff A der DE-A-36 01 272
2) gemäß der DE-A-36 01 272

Tabelle 5

Isocyanathaltige Prepolymere als Verbindungen VI

| Beispiel | a [Gew.-%] | Diisocyanat VI | b [Gew.-%] | OH-Zahl Z | Alkylenoxid Alk | Starter S | Isocyanatgehalt des Prepolymeren [Gew.-%] |
|---|---|---|---|---|---|---|---|
| VI/1 | 21 | VI/5 | 79 | 48 | Alk/1 u. Alk/2 | S/1 | 7 |
| VI/2 | 19 | VI/5 | 81 | 35 | Alk/1 u. Alk/2 | S/1 | 6,7 |
| VI/3 | 50 | VI/5 | 50 | 56 | Alk/2 | S/2 | 17,8 |
| VI/4 | 11 | VI/6 | 37 | 56 | Alk/2 | S/2 | |
| | | | u. 37 | 29 | u. Alk/1 | u. S/2 | 3,5 |
| | | | u. 15 | 27 | u. Alk/2 | u. S/1 | |

Tabelle 6

Härtbare Mischungen B

| Mischung B | a [Gew.-%] | Cop. B1 | T [°C] | b [Gew.-%] | Verb. VI | Rf [N/mm²] | Rd [%] |
|---|---|---|---|---|---|---|---|
| B/1 | 91 | B1/1 | 100 | 9 | VI/3 | | |
| B/2 | 98 | B1/2 | 100 | 2 | VI/5 | | |
| B/3 | 93 | B1/3 | 100 | 7 | VI/2 | | |
| B/4 | 96 | B1/5 | 100 | 4 | VI/10 | | |
| B/5 | 96 | B1/6 | 100 | 4 | VI/10 | | |
| B/6 | 95 | B1/7 | 100 | 5 | VI/9 | | |
| B/7 | 98 | B1/10 | 25 | 2 | VI/9 | 0,3 | 490 |
| B/8 | 98 | B1/10 | 25 | 2 | VI/10 | 0,2 | 640 |
| B/9 | 98 | B1/11 | 25 | 2 | VI/9 | 0,45 | 1090 |
| B/10 | 97 | B1/11 | 25 | 3 | VI/9 | 0,5 | 1000 |
| B/11 | 97 | B1/11 | 25 | 3 | VI/9 | 0,7 | 840 |
| B/12 | 92 | B1/12 | 25 | 8 | VI/1 | 0,9 | 265 |
| B/13 | 96 | B1/14 | 120 | 4 | VI/10 | - | - |
| B/14* | 96 | B1/15 | 120 | 4 | VI/10 | - | - |
| B/15 | 98 | B1/16 | 25 | 2 | VI/5 | 0,5 | 240 |
| B/16 | 92 | B1/16 | 25 | 8 | VI/5 | 0,75 | 95 |

* besonders bevorzugte Mischung

1) gemäß Beispiel 37 der DE-A-36 01 272

2) gemäß der DE-A-36 01 272

Tabelle 6 (Fortsetzung)

| Mischung B | a [Gew.-%] | Cop. B1 | T [°C] | b [Gew.-%] | Verb. VI | Rf [N/mm²] | Rd [%] |
|---|---|---|---|---|---|---|---|
| B/17 | 98 | B1/16 | 25 | 2 | VI/9 | 0,25 | 690 |
| B/18 | 84 | B1/16 | 25 | 16 | VI/9 | 0,35 | 80 |
| B/19 | 84 | B1/16 | 25 | 16 | VI/10 | 0,45 | 40 |
| B/20 | 70 | B1/16 | 25 | 30 | VI/1 | 0,4 | 165 |
| B/21 | 70 | B1/16 | 25 | 30 | VI/2 | 0,8 | 100 |
| B/22 | 70 | B1/16 | 25 | 30 | VI/3 | 0,6 | 510 |
| B/23 | 86 | B1/17 | 25 | 14 | VI/10 | 0,75 | 95 |
| B/24 | 98 | B1/18 | 25 | 2 | VI/5 | 0,2 | 630 |
| B/25 | 96 | B1/18 | 25 | 4 | VI/5 | - | - |
| V/25 1) | 96 | V1/18 | 25 | 4 | VI/5 | - | - |
| B/26 | 94 | B1/19 | 25 | 6 | VI/10 | - | - |
| V/26 2) | 94 | V1/19 | 25 | 6 | VI/10 | - | - |
| B/27 | 98 | B1/20 | 25 | 2 | VI/5 | 0,75 | 200 |
| B/28 | 91 | B1/20 | 25 | 9 | VI/5 | 1,3 | 130 |
| B/29 | 84 | B1/20 | 25 | 16 | VI/9 | 0,65 | 155 |
| B/30 | 84 | B1/20 | 25 | 16 | VI/10 | 0,75 | 95 |
| B/31 | 70 | B1/20 | 25 | 30 | VI/1 | 1,6 | 250 |

* besonders bevorzugte Mischung

1) gemäß Beispiel 37 der DE-A-36 01 272

2) gemäß der DE-A-36 01 272

Tabelle 6 (Fortsetzung)

| Mischung B | a [Gew.-%] | Cop. B1 | T [°C] | b [Gew.-%] | Verb. VI | Rf [N/mm²] | Rd [%] |
|---|---|---|---|---|---|---|---|
| B/32 | 70 | B1/20 | 25 | 30 | VI/2 | 1,65 | 230 |
| B/33 | 86 | B1/20 | 25 | 14 | VI/3 | 0,5 | 180 |
| B/34 | 86 | B1/20 | 25 | 14 | VI/4 | 0,7 | 150 |
| B/35 | 86 | B1/20 | 25 | 14 | VI/9 | 0,65 | 150 |
| B/36 | 91 | B1/20 | 25 | 9 | VI/10 | - | - |
| V/36[2)] | 91 | V1/20 | 25 | 9 | VI/10 | - | - |
| B/37 | 98 | B1/21 | 25 | 2 | VI/10 | - | - |
| V/37[2)] | 98 | V1/21 | 25 | 2 | VI/10 | - | - |

* besonders bevorzugte Mischung

1) gemäß Beispiel 37 der DE-A-36 01 272

2) gemäß der DE-A-36 01 272

Tabelle 7

| Schälfestigkeit (N/mm) der härtbaren Mischungen B/1 bis B/6 | | | | | | |
|---|---|---|---|---|---|---|
| Baumwollstoff verklebt mit | B/1 | B/2 | B/3 | B/4 | B/5 | B/6 |
| Aluminium | 1,3 | 2,0 | 1,4 | 2,3 | 2,1 | 2,4 |
| Holz | 1,1 | 1,6 | 1,2 | 2,1 | 2,0 | 2,1 |
| Glas | 0,6 | 1,2 | 0,9 | 1,6 | 1,9 | 0,8 |
| PVC | 0,8 | 0,8 | 1,2 | 1,5 | 1,7 | 1,2 |
| Gummi | 0,6 | 0,7 | 1,0 | 1,8 | 1,8 | 0,9 |

Tabelle 8

| Schälfestigkeit (N/mm) der härtbaren Mischungen B/13 und B/14 | | | | |
|---|---|---|---|---|
| Aluminiumfolie verklebt mit | B/13 nach 4 Std./nach 24 Std. | | B/14 nach 4 Std./nach 24 Std. | |
| Baumwolle | 0,5 | 1,1 | 1,5 | 3,0 |

**Patentansprüche**

**1.** Mit Luftfeuchtigkeit selbsthärtbare Mischungen von Copolymerisaten auf der Basis von Acrylsäure-, Methacrylsäure- und/oder Vinylestern mit Vernetzungskomponenten folgenden Aufbaus bzw. folgender Zusammensetzung: härtbare Mischungen aus

1) 50 bis 99,9 Gew.-% eines Copolymerisates B1 (= 100 Gew.-%) aus

a) 30 bis 99,9 Gew.-% eines oder mehrerer $C_1$-$C_{24}$-Alkylester der Acryl- und/oder Methacrylsäure und/oder $C_1$-$C_{20}$-Vinylester (Verbindungen I),

b) 0,1 bis 50 Gew.-% eines radikalisch polymerisierbaren Carbonsäureanhydrids (Verbindungen III),

c) 0 bis 50 Gew.-% weiterer Monomerer (Verbindungen IV) und

d) 0 bis 5 Gew.-% der Verbindungen Va bzw. Vb

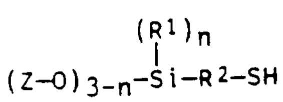

Va

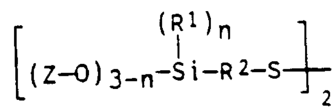

Vb

in der

n ein Wert von 0 bis 2 ist,

$R^1$ eine $C_1$-$C_6$-Alkylgruppe oder die Phenylgruppe bedeutet,

$R^2$ eine $C_1$-$C_{18}$-Alkylgruppe, die Cyclohexyl- oder Phenylgruppe bezeichnet,

Z für eine $C_1$-$C_{18}$-Alkylgruppe, $C_2$-$C_{18}$-Alkylengruppe oder $C_2$-$C_{18}$-Alkinylgruppe steht, deren Kohlenstoffatome durch nichtbenachbarte Sauerstoff- oder Halogenatome ersetzt sein können, oder für eine der Gruppen

$-N=C(R^3)_2$ oder

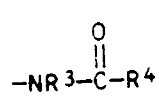 ,

in denen

$R^3$ eine $C_1$-$C_{12}$-Alkylgruppe bedeutet und

$R^4$ eine $C_1$-$C_{18}$-Alkylgruppe bezeichnet,
und
2) 0,1 bis 50 Gew.-% eines zwei- oder mehrwertigen Isocyanats (Verbindungen VI).

**2.** Mit Luftfeuchtigkeit selbsthärtbare Mischungen nach Anspruch 1, die folgenden Aufbau bzw. folgende Zusammensetzung haben:
härtbare Mischungen aus
1) 70 bis 99 Gew.-% eines Copolymerisates B1 (= 100 Gew.-%) aus
a) 38 bis 98,4 Gew.-% der Verbindungen I,
b) 1,5 bis 10 Gew.-% der Verbindungen III,
c) 0 bis 50 Gew.-% der Verbindungen IV und
d) 0,1 bis 2 Gew.-% der Verbindungen Va bzw. Vb
und
2) 1 bis 30 Gew.-% der Verbindungen VI.

**3.** Mit Luftfeuchtigkeit selbsthärtbare Mischungen aus derartigen Copolymerisaten mit Vernetzungskomponenten nach Anspruch 1 oder 2, zu deren Herstellung $C_1$-$C_4$-Alkylester der Acryl- und/oder Methacrylsäure als Verbindungen I verwendet werden.

**4.** Mit Luftfeuchtigkeit selbsthärtbare Mischungen aus derartigen Copolymerisaten mit Vernetzungskomponenten nach Anspruch 1 bis 3, zu deren Herstellung Maleinsäureanhydrid als Verbindung III verwendet wird.

**5.** Mit Luftfeuchtigkeit selbsthärtbare Mischungen aus derartigen Copolymerisaten mit Vernetzungskomponenten nach Anspruch 1 bis 4, zu deren Herstellung Acryl- und/oder Methacrylnitril und/oder Styrol als Verbindungen IV verwendet werden.

**6.** Mit Luftfeuchtigkeit selbsthärtbare Mischungen aus derartigen Copolymerisaten mit Vernetzungskomponenten nach Anspruch 1 bis 5, zu deren Herstellung Mercaptopropyltrimethoxysilan und/oder Mercaptopropyltriethoxysilan als Verbindungen Va verwendet werden.

**7.** Mit Luftfeuchtigkeit selbsthärtbare Mischungen aus derartigen Copolymerisaten mit Vernetzungskomponenten nach Anspruch 1 bis 6, zu deren Herstellung Di- und/oder Triisocyanate als Verbindungen VI verwendet werden.

**8.** Verwendung der härtbaren Mischungen gemäß Anspruch 1 bis 7 als mit Luftfeuchtigkeit selbsthärtbare Kleb-, Dichtungs- und Beschichtungsmassen.

**9.** Mit Luftfeuchtigkeit selbsthärtbare Kleb-, Dichtungs- und Beschichtungsmassen, enthaltend die Copolymerisate A oder die härtbaren Mischungen gemäß Anspruch 1 bis 7.

## Claims

**1.** A mixture of copolymers which is self-curable with atmospheric humidity and is based on acrylic, methacrylic and/or vinyl esters with crosslinkers of the following composition:
curable mixtures of
1) from 50 to 99.9% by weight of a copolymer B1 (= 100% by weight) composed of
a) from 30 to 99.45% by weight of one or more $C_1$-$C_{24}$-alkyl esters of acrylic and/or methacrylic acid and/or $C_1$-$C_{20}$ vinyl esters (compounds I),
b) from 0.1 to 50% by weight of a carboxylic anhydride which can undergo free radical polymerization (compounds III),
c) from 0 to 50% by weight of other monomers (compounds IV) and

d) from 0 to 5% by weight of the compounds Va or Vb

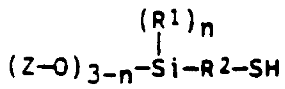

Va

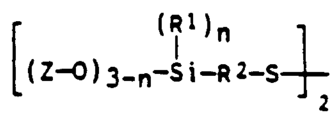

Vb

where
n is from 0 to 2,
$R^1$ is $C_1$-$C_6$-alkyl or phenyl,
$R^2$ is $C_1$-$C_{18}$-alkyl, cyclohexyl or phenyl,
Z is $C_1$-$C_{18}$-alkyl, $C_2$-$C_{18}$-alkenyl or $C_2$-$C_{18}$-alkynyl, whose carbons can be replaced by non-adjacent oxygens or halogens, or
-N = $C(R^3)_2$ or

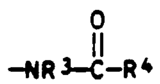 ,

where
$R^3$ is $C_1$-$C_{12}$-alkyl and
$R^4$ is $C_1$-$C_{18}$-alkyl,
and
2) from 0.1 to 50% by weight of a di- or polyisocyanate (compounds VI).

**2.** A mixture which is self-curable with atmospheric humidity as claimed in claim 1, which has the following composition:
curable mixtures of
1) from 70 to 99% by weight of a copolymer B1 (= 100% by weight) composed of
a) from 38 to 98.4% by weight of the compounds I,
b) from 1.5 to 10% by weight of the compounds III,
c) from 0 to 50% by weight of the compounds IV and
d) from 0.1 to 2% by weight of the compounds Va or Vb
and
2) from 1 to 30% by weight of the compounds VI.

**3.** A mixture of copolymers which is self-curable with atmospheric humidity with crosslinkers as claimed in claim 1 or 2, in whose preparation $C_1$-$C_4$-alkyl esters of acrylic and/or methacrylic acid are used as compounds I.

**4.** A mixture of copolymers which is self-curable with atmospheric humidity with crosslinkers as claimed in claim 1 to 3, in whose preparation maleic anhydride is used as compound III.

**5.** A mixture of copolymers which is self-curable with atmospheric humidity with crosslinkers as claimed in claim 1 to 4, in whose preparation acrylonitrile and/or methacrylonitrile and/or styrene are used as compounds IV.

**6.** A mixture of copolymers which is self-curable with atmospheric humidity with crosslinkers as claimed in claim 1 to 5, in whose preparation mercaptopropyltrimethoxysilane and/or mercaptopropyltriethoxysilane are used as compounds Va.

**7.** A mixture of copolymers which is self-curable with atmospheric humidity with crosslinkers as claimed in claim 1 to 6, in whose preparation di- and/or triisocyanates are used as compounds VI.

**8.** The use of the curable mixtures as claimed in claim 1 to 7 as adhesive, sealing and coating compositions which are self-curable with atmospheric humidity.

**9.** An adhesive, sealing or coating composition which is self-curable with atmospheric humidity and contains the curable mixtures as claimed in claim 1 to 7.

**Revendications**

**1.** Mélanges, autodurcissables en présence de l'humidité de l'air, de copolymères à base d'esters d'acide acrylique, d'acide méthacrylique et/au d'esters vinyliques avec des composants de réticulation ayant la structure au la composition suivante:

Mélanges durcissables de

1) 50 à 99,9% en poids d'un copolymère B1 (= 100% en poids) de

a) 30 à 99,9% en poids d'un ou de plusieurs esters alkyliques en $C_1$-$C_{24}$ de l'acide acrylique et/ou méthacrylique et/ou esters vinyliques en $C_1$-$C_{20}$ (composés I),

b) 0,1 à 50% en poids d'un anhydride carboxylique susceptible de polymérisation radicalaire (composés III),

c) 0 à 50% en poids d'autres monomères (composés IV) et

d) 0 à 5% en poids des composés Va ou Vb

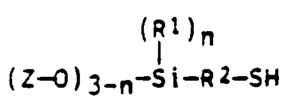

Va

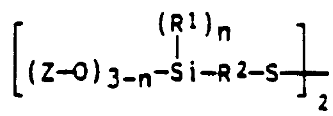

Vb

dans lesquels

n est un nombre de 0 à 2,

$R^1$ représente un groupement alkyle en $C_1$-$C_6$ ou le groupement phényle,

$R^2$ désigne un groupement alkyle en $C_1$-$C_{18}$, le groupement cyclohexyle ou phényle,

Z est mis pour un groupement alkyle en $C_1$-$C_{18}$,un groupement alkylène en $C_2$-$C_{18}$ ou un groupement alcynyle en $C_2$-$C_{18}$, dont des atomes de carbone peuvent être remplacés par des atomes d'oxgène ou d'halogène non voisins, ou pour l'un des groupements

$-N=C(R^3)_2$ ou

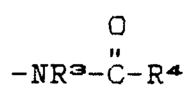

où

$R^3$ représente un groupement alkyle en $C_1$-$C_{12}$ et

$R^4$ représente un groupement alkyle en $C_1$-$C_{18}$,

et de

2) 0,1 à 50% en poids d'un isocyanate bi- ou multivalent (composes VI).

**2.** Mélanges autodurcissables en présence de l'humidité de l'air selon la revendication 1, ayant la structure ou la composition suivante:

Mélanges durcissables de

1) 70 à 99% en poids d'un copolymère B1 (= 100% en poids) de

a) 38 à 98,4% en poids des composés I,

b) 1,5 à 10% en poids des composés III,

c) 0 à 50% en poids des composés IV et

d) 0,1 à 2% en poids des composes Va ou Vb,

et de

2) 1 à 30% en poids des composés VI.

3. Mélanges, autodurcissables en présence de l'humidité de l'air, de copolymères avec des composants de réticulation selon la revendication 1 ou 2, pour la préparation desquels on utilise, comme composés I, les esters alkyliques en $C_1$-$C_4$ de l'acide acrylique et/ou méthacrylique.

4. Mélanges, autodurcissables en présence de l'humidité de l'air, de copolymères avec des composants de réticulation selon l'une quelconque des revendications 1 à 3, pour la préparation desquels on utilise, comme composé III, de l'anhydride maléique.

5. Mélanges, autodurcissables en présence de l'humidité de l'air, de copolymères avec des composants de réticulation selon l'une quelconque des revendications 1 à 4, pour la préparation desquels on utilise, comme composés IV, de l'acrylonitrile et/ou du méthacrylonitrile et/ou du styrène.

6. Mélanges, autodurcissables en présence de l'humidité de l'air, de copolymères avec des composants de réticulation selon l'une quelconque des revendications 1 à 5, pour la préparation desquels on utilise, comme composés Va, du mercaptopropyltriméthoxysilane et/ou du mercaptopropyltriéthoxysilane.

7. Mélanges, autodurcissables en présence de l'humidité de l'air, de copolymères avec des composants de réticulation selon l'une quelconque des revendications 1 à 6, pour la préparation desquels on utilise, comme composes VI, des di- et/ou triisocyanates.

8. Utilisation des mélanges durcissables selon l'une quelconque des revendications 1 à 7 comme masses de collage. d'étanchéification et d'enduction autodurcissables en présence de l'humidité de l'air.

9. Masses de collage, d'étanchéification et d'enduction autodurcissables en présence de l'humidité de l'air, contenant les melanges durcissables selon l'une quelconque des revendications 1 à 7.